# EUROPEAN PATENT SPECIFICATION

(11) **EP 1 066 128 B1**
(45) Date of publication and mention of the grant of the patent: **22.05.2002**
(21) Application number: 99913463.8
(22) Date of filing: 26.03.1999
(51) Int. Cl.: B22F 8/00, C22C 33/02

(54) **METAL POWDERS OBTAINED FROM RESIDUE OF MATERIAL REMOVAL PROCESSES ON IRON PARTS PRODUCED BY CHILL CASTING**
METALLPULVER GEWONNEN AUS MATERIALABTRAGENDEN BEARBEITUNGSVERFAHREN VON EISENHALTENDEN HARTGUSSTEILEN
POUDRES METALLIQUES ISSUES DU RESIDU DE PROCESSUS D'ENLEVEMENT DE MATIERE SUR DES PIECES EN FER PRODUITES PAR MOULAGE EN COQUILLE

(30) Priority: 28.03.1998 GB 9806731
(43) Date of publication of application: 10.01.2001
(60) Divisional application: 00127665.8
(73) Proprietor: Federal-Mogul Sintered Products Limited, Coventry West Midlands CV6 4BG (GB)
(72) Inventor: PURNELL, Charles Grant, West Midlands CV6 4BG (GB); BESSON, Virginie Emmanuelle, Coventry, West Midlands CV6 4BG (GB); HAMILTON, Ian, Surrey GU8 6LD (GB)
(74) Representative: Goddard, David John
(86) International application number: GB9900961
(87) International publication number: WO9950010

(56) References cited:
- GB-A- 1 285 186
- US-A- 4 252 577

## Description

The present invention relates to iron-based metal powders and to a method of producing an article from such metal powders. The invention has particular application to the manufacture of metal products from metal powders by a powder metallurgy route.

It is known to produce metal products from powder by a variety of techniques including compaction and sintering in its broadest sense. It is also known to increase the wear resistance of an iron-based powder metal product by preparing a mixture of iron-based powder with graphite powder particles and subsequently processing the mixture to alloy the carbon with the iron-based powder by a diffusion mechanism to form carbides for example. The iron-based powders and the graphite powders currently used are both high quality, high cost goods. In addition there are problems in assuring the quality of powder mixtures of iron and graphite due to the large density difference (graphite = 2.25g/cc, Fe = 7.87g/cc), to the extent that proprietary means are used to adhere the two powders to prevent segregation or demixing of mixture constituents (e.g. Starmix™ mixtures a trade mark of Hoganas Corporation, or FLOMET™ a trade mark of Quebec Metal Powders Ltd.).Furthermore, powders containing graphite are susceptible to moisture absorption over time causing a reduction in powder flow characteristics which has detrimental consequences for consistent die filling. Steam reactions can also occur during sintering causing gas porosity. It would be desirable if a powder that can be used in such processes that produces a powder metal product having, at least, a similar degree of wear resistance through iron carbon alloying by diffusion during sintering but at a lower cost and without or at least with reduced mixing problems existed.

GB-A-1285186 describes a method of producing a sintered ferrous-based article by incorporation of either a flake graphite cast iron swarf or the residue from a shot blasting operation into a powder mixture. However, the types of residue described are disparate and it is very unlikely that a product having good or repeatable properties could be produced.

According to the present invention, there is provided a method of producing a ferrous-based metal article by a powder metallurgy route, the method comprising the steps of preparing a mixture of powder constituents having a desired overall chemical composition, the mixture including a proportion of a cast iron residue powder derived from a metal removal process, compacting said powder mixture and sintering said compacted powder mixture, said method being characterised by the steps of providing the mixture with from 5 to 30 weight% thereof of the metal powder derived from the residue which is produced during the grinding of a chill-cast cast iron body and in that said residue metal powder is predominantly cementite (Fe₃C) and comprises from 2 to 7 weight% of carbon.

The mixture contains at least 5 weight% of the residue powder. More preferably, the mixture contains at least 10 weight% of the residue powder. The minimum residue powder content will largely depend upon the reason why it is being added and on the type of other constituent ferrous-based powders in the mixture. For example if the residue powder is being used as a sintering aid as explained further hereinbelow, then a minimum of 5 weight% may be sufficient. However, when it is intended that the residue powder is to provide the majority or all of the carbon content of the mixture for an alloyed ferrous-based powder then a minimum of 10 weight% may be preferable.

A preferred carbon range for the residue powder may be from 2.5 to 5 weight% which is conducive to the use of practical casting processing temperatures.

A more preferred carbon range in the residue powder may be 2.5 to 4.5 weight% which corresponds generally to widely available cast iron compositions.

The powder produced from the material removal or shaping process is the residue produced during the grinding of a chill-cast cast iron body. This residue as generated is normally in the form of a sludge with oil and water and is presently disposed of as waste, typically as land fill. This residue is currently not viewed as having any commercial economic value indeed, companies generating such residue can, for example, pay about £100/tonne to contractors for its disposal, such costs escalating as environmental legislation becomes more restrictive. Thus, not only is such residue seen as valueless, it is actually a cost in itself and its disposal is a very real economic cost. Reducing or eliminating the need to dispose of this waste product would present an advantage. Furthermore, if this residue, suitably treated, could be employed as a constituent of a powder metallurgy product in its own right, several advantages may accrue. Firstly it may provide a material cost reduction in powder metallurgy manufacturing processes; and, secondly it may provide the possibility of an alternative means of providing at least a part of the carbon content with consequent advantages in processing flexibility due to modified reaction kinetics of the compacted powder during sintering. Carbon powder in the form of graphite has an activity coefficient of 1 and diffuses extremely rapidly and uncontrollably at temperatures above about 800°C whereas a typical residue powder has a carbon activity coefficient of about 0.03 thus gives more control over the sintering process by slowing down the diffusion of carbon through the matrix. The cementite eutectic further provides a small quantity of transient liquid phase at a practical and easily achievable and controllable sintering temperature which transient liquid phase assists in promoting densification of the pressing.

The method of the present invention provides a means of providing carbon in a ferrous-based powder metallurgy product by virtue of the relatively high carbon content in the cast iron particles which is present mainly in the form of iron carbide or cementite (Fe₃C).

The main source of this residue powder is grinding operations for shaping and/or sizing chill-cast cast iron components such as internal combustion engine camshafts and tappets for example. There is a requirement for the cam lobes of camshafts to be very hard to resist wear when sliding against tappets or cam followers for example. The wear resistant property is generally conferred by ensuring that at least the outer periphery of the lobes and rubbing surfaces of tappets solidifies as so-called white iron which is predominantly cementite.

Until relatively recently, such grinding operations were effected by alumina or alumino-silicate grinding wheels which, under normal production conditions need to be replaced every few days at least. Thus, the grinding residues so formed had a relatively significant content of alumina or alumino-silicate which is detrimental to the use envisaged by the method of the present invention. However, more recently such grinding operations have been effected by boron nitride grinding wheels which can last for three months on comparable usage. Thus, the content of undesirable extraneous non-metallic inclusions is relatively very low.

The manufacture of chill-cast iron slugs solely for the purpose of grinding to produce the residue powders described herein is also encompassed in this invention.

Because of the metallurgical nature of cementite it is extremely hard and brittle, consequently the particles produced by the grinding operation are small (much smaller than those produced by turning operations for example) and of a size which may be homogeneously assimilated into the bulk of a ferrous-based powder mixture prior to compaction into a green body.

Since the density of the residue particles is much closer to the density of the other metallic constituents of the overall mixture than is graphite (the density of Fe₃C is 7.7 g/cc), the segregation of the constituents on mixing or storage is much reduced.

The fact that the residue powder particles are small, compared with the particle sizes of the other ferrous-based powder particles in the mixture, also enables them to be assimilated into the green pressing and into the subsequent microstructure of the sintered component under normal sintering conditions for ferrous-based materials.

A further advantage of the method of the present invention is that by virtue of the residue particles containing a high proportion of cementite, there is a eutectic phase which melts at about 1150°C which can provide a transient liquid phase which may assist both the assimilation of the residue particles into the matrix to minimise prior particle boundaries, giving mechanical property benefits and, by promoting uniform shrinkage and thus assisting densification of the article on sintering. Effectively, the residue powder is being used in the role of a sintering aid as well as supplying necessary carbon.

In the prior art where graphite is used to supply carbon for carbide formation, it begins to diffuse into the structure at about 900°C. However, the carbon from cementite in the residue powder used in the method of the present invention does not begin to diffuse into the surrounding structure to any great extent until a relatively much higher temperature. An example where this is an advantage is in the process known as green machining where the machining of the fully sintered final product is difficult. Thus, to alleviate this problem the green compact is initially pre-sintered at a lower temperature to confer sufficient strength to withstand a machining operation to bring the compact close to the final dimensions required prior to either subsequent further pressing and sintering or final full sintering. Where at least some of the carbon is supplied by a residue powder according to the method of the present invention, the pre-sintering step can be extended to higher temperatures, and obviate consequent additional carbide formation due to rapid diffusion of elemental carbon since such is not present, and still give a more easily machined article.

The amount of residue powder employed in the mixture may be a function of the other constituents of the powder mixture. For example, if the other constituents include a highly alloyed ferrous powder containing molybdenum for example, the required carbon content will be low and thus the proportion of residue powder may be correspondingly low, e.g. a residue powder content of 10 weight%. On the other hand, if the other powder mixture constituents comprise mainly unalloyed or low-alloy iron, the residue may be relatively high at 20 to 30 weight% for example to maintain a high carbon content.

The sintering step may be carried out under normal mass production conditions of protective gaseous atmospheres of hydrogen/nitrogen mixtures for example or any other known for the purpose of sintering ferrous materials at substantially ambient atmospheric pressure.

Similarly, the sintering furnaces employed may be conventional continuous throughput conveyor belt type furnaces or walking beam type furnaces for example or any other suitable furnace such as a batch type vacuum sintering furnace.

In one embodiment of the method of the present invention, the residue powder derived from the shaping process may be a pre-alloyed metal powder having a composition within the following ranges:
2.5 to 4.5% Carbon
0.3 to 3.0% Silicon
up to 1.0% Manganese
up to 1.0% Chromium
up to 1.5% Sulphur
up to 0.5% Phosphorus
up to 0.5% Nickel
up to 1.0% Molybdenum
up to 0.03% Copper
balance Iron
plus incidental impurities.

Such impurities are those commonly found in the technology relating to the casting of cast irons, eg, the use of tellurium or bismuth containing mould washes to promote surface chill and possibly a small amount of debris from grinding wheels as described above.

Preferably the residue metal powder has a substantially uniform particle size.

Preferably, the maximum particle size is not more than 50µm. More preferably the mean particle size is about 20µm or less. Even more preferably the mean particle size may be as low as 10µm which is comparable to that of graphite powder commonly used in powder metallurgy processes.

Due to its origin, the residue metal powder requires cleaning prior to use in the method of the present invention. The residue is initially generated as a sludge mixed mainly with oil and water as a coolant/lubricant. Normally such residue is disposed of as described above and the question of separating and cleaning the metal powder constituent never arises.

A method for the production of a pre-alloyed metal residue powder for use in the method according to the present invention comprises the steps of:
i) grinding a chill cast iron body using a grinding wheel together with a cooling fluid to produce a grinding residue;
ii) washing the residue to remove the cooling fluid;
iii) drying the residue, and
iv) subjecting the residue to mechanical agitation to reduce particle agglomeration.

Optionally, a centrifuging step may be included after the washing step prior to the drying step.

Preferably the residue is washed using an environmentally friendly solvent basis.

Preferably the residue is roughly crushed during the washing process.

Preferably the dried residue is agitated after drying to produce a more uniform grain size, and to resist agglomeration.

The washed and dried residues may be milled to finally break up any agglomerates. There may also be a degree of comminution of individual particles in this step. Tests have shown that milling of the dried powder in a Giro Mill (trade name) for 3 minutes for example reduced the average particle size from 50 to 20µm due to reduced agglomeration.

Preferably the grinding wheel comprises boron nitride. Alternatively the grinding wheel may be alumina based.

The method for the production of the prealloyed metal residue provides the advantage of utilising a manufacturing by-product which would otherwise be disposed of. The powder produced by such methods is suitable for use in powder metallurgy techniques as described above. Such powders contain a significant proportion of iron carbides and a high carbon content, up to 5% for example. By the method of the present invention, such powders are now of commercial utility, since they provide for a powder metal body having the requirements noted above, and with carbon intimately alloyed with iron and not susceptible to demixing due to density differences.

During the sintering of ferrous-based powder metal green compacts, the diffusion of carbon into surrounding iron based particles, at temperatures in excess of 1000°C, is often the phenomenon determining the rate of sintering. Such diffusion is a function of concentration, temperature and particle size (diffusion distance). Clearly, the success of using a prealloyed powder containing carbon as a resource for carbon potential for diffusing into surrounding powder particles will be greater for a fine particle size. The hardness of the brittle iron carbide phase of cast iron chill is of the order of 1000 Hv or greater, there is a strong tendency for the grinding residues to be of fine particle size, certainly with a mean particle size of 20µm or less, and under certain grinding conditions down to 8µm mean particle size.

The ferrous powders with which the residue powder is mixed may be based on iron or iron alloy powders such as steel powders, for example, with a reduced graphite content, or other powder constituents common to the powder metallurgy of ferrous structural components, including for example metallic alloying elements, sintering aids such as copper, machining aids such as manganese sulphide, solid lubricants such as molybdenum disulphide, and so forth.

Materials made according to the foregoing paragraph may also include additions of hard, wear resistant particles of inorganic materials in the powder mixture prior to compaction. Such materials may comprise ceramics including for example at least one of carbides, oxides, borides, nitrides and/or carbo-nitrides to further improve wear resistance and/or cutting ability of sintered products made therefrom.

Although the residue powder content of the method of the present invention is considered as a primary source of carbon for the microstructure of the article being produced, the presence of carbon for example pre-alloyed into another ferrous powder constituent of the mixture nor the addition of elemental carbon in the form of graphite for example is not precluded for the adjustment of the final carbon content of the mixture. The use of graphite to adjust the desired overall carbon content may be desirable in some circumstances since it endows the powder mixture with greater compressibility and is a lubricant in its own right. Pre-alloyed carbon in the other ferrous constituents (other than the residue that is) increases the strength of the powder particles and consequently reduces compressibility. Indeed, as described in WO95/26421 of common ownership herewith, the use of carbon under certain sintering conditions is conducive to the production of ferrous components having densities of greater than 95% theoretical. However, in the method of the present invention, the use of a residue powder containing a high proportion of cementite provides an alternative means of densification to densities of 95% of full theoretical density and greater. This has specific relevance to the production of a wide range of highly alloyed steel compositions where densities of this level are required in view of the arduous applications to which such materials are put.

The range of compacted and sintered materials which may be produced by the method of the present invention encompass virtually any ferrous-based material, which can embody up to about 30 weight% of the ferrous-residue powder. Thus, the only limitation is the ability to produce the powder mixture of the desired composition from the materials which are available to the powder metallurgy industry. Within the scope of the present invention it is envisaged that special pre-alloyed ferrous-based powders may be produced so as to complement a particular source of the residue material to arrive at a desired overall composition of an article which it is desired to produce. Further additions of elemental carbon, die lubricant additives, machinability enhancing additives, metal powders or any other known additives may be included as deemed necessary.

The powder metallurgy techniques which may be applied to the method of the present invention are all those currently known and include, for example, uniaxial die pressing and sintering, cold isostatic compaction and sintering, hot isostatic pressing, powder extrusion, powder rolling and sintering.

The invention will now be described with reference to the following illustrative Examples.

### Example I

A typical source of residue produced following grinding of a chill cast iron body using a grinding wheel is the grinding to shape and size of a chill-cast cast iron camshaft.

A cast body was prepared using the known chill cast process. The cast body was of the following nominal composition ranges expressed in weight percent; 3.5 to 3.8 Carbon; 1.7 to 2.4 Silicon; 0.6 to 0.9 Manganese; 0.7 to 1.0 Chromium; up to 1.5 Sulphur; up to 0.3 Phosphorus; up to 0.3 Nickel; and, up to 0.3 Molybdenum; the balance being Iron and unavoidable impurities. The cast body was ground using an alumina based grinding wheel, whilst being cooled using a cooling liquid. The cooling liquid was a water based emulsion with HYSOL X (trade name), a chlorine free, soluble oil produced by Castrol. The ground material was carried away from the cast body to a refuse container, and accumulated in the container as a grinding residue.

The grinding residue was then taken from the container and washed in acetone to remove the cooling fluid used during grinding. During washing the residue was roughly crushed by hand to break up the biggest clusters of ground material from the residue.

Once dry, the residue was cleaned in a solvent, in this case trichloroethane. This took place inside a condensation column and lasted for two hours. Next, the residue was dried in an air furnace at 120°C for 90 minutes.

The residue particles were found to have a mean particle size of 17µm, with an upper limit of 40µm.

Analysis of the residue particles showed the presence of cementite (Fe₃C), magnetite (Fe₃O₄), corundum (Al₂O₃) and iron. Analysis also showed the presence of 0.04% Al and 3.6%C. It is believed that the corundum particles and aluminium content were derived from the grinding wheel. However, this would not be a problem if a boron nitride grinding wheel were to be employed.

A first set of sintered samples were next produced utilising the residue particles. A mixture was prepared having a composition in weight% of 25 residue powder, 1 graphite powder, 2 copper powder and 72 plain iron powder. The mixture was pressed to form a green pressing at room temperature at 770 MPa. The green pressing was then sintered at around 1120°C.

Analysis of the microstructure showed the sintered samples to consist of large grains together with an intra-granular network of small grains. The large grains appeared to have a pearlitic microstructure. The intra-granular network is mainly martensitic, though pearlitic areas can also be seen in this network. The hardness of the sintered samples was found to be around 70 HRB. Occasional alumina particles could be seen in the matrix.

### Example II

A mixture of powders was blended comprising 20 weight% of the residue powder described with reference to Example I above and 80 weight% of a pre-alloyed steel powder having a composition in weight% of: 1 carbon; 8 cobalt; 4 chromium; 10 molybdenum; 1 vanadium; 2 tungsten; balance iron apart from incidental and unavoidable impurities. This pre-alloyed powder was water atomized and annealed and mixed with the residue powder with a fugitive wax die lubricant. Green compacts were produced at a pressing pressure of 770 MPa and sintered at 1170°C under a hydrogen/nitrogen protective gas atmosphere at ambient pressure in a walking beam continuous sintering furnace.

A comparative example was made comprising 100% of the pre-alloyed powder described above with an addition of graphite powder to bring the final carbon content of the sintered alloy to 1.5 weight% but with no residue powder. The powder mixture was compacted and sintered under identical conditions to those described with reference to Example II.

The sintered products of Example II and the Comparative example were hardened and tempered by solution treating, quenching to room temperature, cryogenic treatment and tempering at 625°C

Tests were undertaken on the hardened and tempered materials to determine the density, hardness, Young's Modulus and 0.2% compressive proof stress. The results of these tests are given below in the Table.

**Table**

| **Property** | **Example II** | **Comparative Example** |
|---|---|---|
| Density g/cc | 8.0(99.5% Th. Dens) | 7.95(99% Th. Dens) |
| Hardness (HRC) | 56 | 56 |
| Young's Mod.(GPa) | 200 | 210 |
| 0.2% Comp.P.S.(MPa) | 2000 | 2100 |

It may be seen that the density and hardness of the material of Example II are directly comparable with those of the Comparative example. In this regard it should be remembered that the Example made according to the present invention had 20 weight% less of the expensive pre-alloyed steel powder which represents a significant material cost saving for minimal loss of properties.

### Example III

Grinding residue fully cleaned, dried and free from agglomeration was added at 20 weight% to Astaloy Mo(1.5) (trade name), a pre-alloyed atomised iron powder containing 1.5 weight% molybdenum, and 0.5 weight% Acrawax (trade name) pressing wax. No graphite was added. The mixture was blended in a Turbula (trade name) mixer for twenty minutes to give a powder with an apparent density of 2.71 g/cc. The blend was pressed to give an annular ring component at 770 Mpa to give a green density of 6.6 g/cc. After sintering in a nitrogen/hydrogen atmosphere at 1170°C the density had increased to 6.85 g/cc. The as-sintered hardness was 84 HRB. The microstructure of the as-sintered component was almost entirely fine bainite with an almost complete absence of ferrite. Further samples sintered in a dilatometer with the same atmosphere and maximum temperature showed a change in expansion coefficient in cooling to between 300 and 400°C, corresponding to bainite formation. Clearly, the as-sintered structure revealed the complete diffusion of carbon from the grinding residue into the iron matrix.

## Claims

1. A method of producing a ferrous-based metal article by a powder metallurgy route, the method comprising the steps of preparing a mixture of powder constituents having a desired overall chemical composition, the mixture including a pro portion of a cast iron residue powder derived from a metal removal process, compacting said powder mixture and sintering said compacted powder mixture, the method being **characterised by** the step of providing the mixture with from 5 to 30 weight% thereof of the metal powder derived from the residue which is produced during the grinding of a chill-cast cast iron body and in that said residue metal powder is predominantly cementite (Fe₃C) and comprises from 2 to 7 weight% of carbon.

2. A method according to claim 1 wherein the residue is treated by washing and drying to remove oil and water therefrom.

3. A method according to either claim 1 or claim 2 wherein the amount of residue powder is a maximum of 25 weight%.

4. A method according to any one preceding claim wherein the minimum residue powder content is 10 weight%.

5. A method according to any one preceding claim wherein the carbon content of the residue powder is a maximum of 5 weight%.

6. A method according to claim 5 wherein the carbon content of the residue powder lies in the range from 2.5 to 4.5 weight%.

7. A method according to any one preceding claim wherein the metal residue powder has the following composition in weight percent:
2.5 to 4.5% Carbon;
0.3 to 3.0% Silicon;
up to 1.0% Manganese;
up to 1.0% Chromium;
up to 1.5% Sulphur;
up to 0.5% Phosphorus;
up to 0.5% Nickel;
up to 1.0% Molybdenum;
up to 0.03% Copper;
balance Iron;
plus incidental impurities.

8. A method according to any one preceding claim wherein the metal residue powder has a maximum particle size of 50µm.

9. A method according to any one preceding claim wherein the mean particle size is about 20µm or less.

10. A method according to claim 9 wherein the mean particle size is 10µm or less.

11. A method according any one preceding claim wherein the ferrous powder mixture includes at least one further powder selected from the group comprising: graphite; metallic alloying constituents; sintering aids; machining aids; solid lubricants; and die lubricant.

12. A method according to any one preceding claim wherein the mixture includes at least one material selected from the group comprising: carbides, oxides, borides, nitrides, other ceramics and carbo-nitrides.

## Patentansprüche

1. Verfahren zur Herstellung eines Gegenstands mit einem Metall auf Eisenbasis auf pulvermetallurgischem Wege, wobei das Verfahren die Schritte umfaßt, bei denen ein Gemisch von Pulverbestandteilen mit einer gewünschten allgemeinen chemischen Zusammensetzung bereitgestellt wird, wobei das Gemisch einen Anteil eines Pulvers aus einem Gußeisenrückstand enthält, der aus einem Metallentfernungsverfahren stammt, das Pulvergemisch verdichtet und das verdichtete Pulvergemisch gesintert wird, wobei das Verfahren **gekennzeichnet ist durch** den Schritt, bei dem in das Gemisch 5 bis 30 Gew.-% des Metallpulvers eingebracht werden, das von dem Rückstand stammt, der beim Abschleifen eines hartgegossenen Gußeisenrohlings erzeugt wird, und **dadurch**, daß das Metallpulver aus dem Rückstand vorwiegend aus Zementit (Fe₃C) besteht und 2 bis 7 Gew.-% Kohlenstoff umfaßt.

2. Verfahren nach Anspruch 1, bei dem der Rückstand durch Waschen und Trocknen behandelt wird, um Öl und Wasser daraus zu entfernen.

3. Verfahren nach Anspruch 1 oder Anspruch 2, bei dem die Menge des Rückstandspulvers maximal 25 Gew.-% beträgt.

4. Verfahren nach einem vorhergehenden Anspruch, bei dem der Rückstandspulvergehalt mindestens 10 Gew.-% beträgt.

5. Verfahren nach einem vorhergehenden Anspruch, bei dem der Kohlenstoffgehalt des Rückstandspulvers maximal 5 Gew.-% beträgt.

6. Verfahren nach Anspruch 5, bei dem der Kohlenstoffgehalt des Rückstandspulvers im Bereich von 2,5 bis 4,5 Gew.-% liegt.

7. Verfahren nach einem vorhergehenden Anspruch, bei dem das Metallrückstandspulver die folgende Zusammensetzung in Gewichtsprozent aufweist:
2,5 bis 4,5 % Kohlenstoff;
0,3 bis 3,0 % Silicium;
bis zu 1,0 % Mangan;
bis zu 1,0 % Chrom;
bis zu 1,5% Schwefel;
bis zu 0,5 % Phosphor;
bis zu 0,5 % Nickel;
bis zu 1,0 % Molybdän;
bis zu 0,03 % Kupfer;
Rest Eisen;
sowie zufällige Verunreinigungen.

8. Verfahren nach einem vorhergehenden Anspruch, bei dem das Metallrückstandspulver eine maximale Teilchengröße von 50 µm aufweist.

9. Verfahren nach einem vorhergehenden Anspruch, bei dem die mittlere Teilchengröße etwa 20 um oder weniger beträgt.

10. Verfahren nach Anspruch 9, bei dem die mittlere Teilchengröße bei 10 µm oder weniger liegt.

11. Verfahren nach einem vorhergehenden Anspruch, bei dem das Eisenpulvergemisch mindestens ein weiteres Pulver enthält, das aus der Gruppe ausgewählt ist, die folgendes umfaßt: Graphit, Metall-Legierungsbestandteile; Sinterhilfen; Zerspanungshilfen; feste Schmiermittel; und Formschmiermittel.

12. Verfahren nach einem vorhergehenden Anspruch, bei dem das Gemisch mindestens ein Material enthält, das aus der Gruppe ausgewählt ist, die folgendes umfaßt: Carbide, Oxide, Boride, Nitride, andere Keramiken und Carbonitride.

## Revendications

1. Procédé de production d'article en métal à base de fer selon une technique de métallurgie des poudres, le procédé comprenant les étapes de préparer un mélange de constituants en poudre ayant une composition chimique globale désirée, le mélange comprenant une proportion de poudre résiduelle de fonte provenant d'un processus d'enlèvement de métal, de compacter ledit mélange de poudre et de fritter ledit mélange de poudre compactée, le procédé étant **caractérisé en ce que** le mélange comprend de 5 à 30 % en poids de poudre métallique provenant des résidus produits durant le meulage d'un corps de fonte moulé en coquille et **en ce que** ladite poudre métallique résiduelle est principalement de la cémentite (Fe₃C) et comprend de 2 à 7 % en poids de carbone.

2. Procédé selon la revendication 1, **caractérisé en ce que** les résidus sont traités par lavage et séchage afin d'y retirer l'huile et l'eau.

3. Procédé selon l'une des revendications 1 ou 2, **caractérisé en ce que** la quantité de poudre résiduelle est au maximum de 25 % en poids.

4. Procédé selon l'une quelconque des revendications précédentes, **caractérisé en ce que** la quantité minimale de poudre résiduelle est 10 % en poids.

5. Procédé selon l'une quelconque des revendications précédentes, **caractérisé en ce que** la quantité de carbone de la poudre résiduelle est au maximum de 5 % en poids.

6. Procédé selon la revendication 5, **caractérisé en ce que** la quantité de carbone de la poudre résiduelle est comprise dans une plage de 2,5 à 4,5 % en poids.

7. Procédé selon l'une quelconque des revendications précédentes, **caractérisé en ce que** la poudre résiduelle métallique présente la composition suivante, en pourcentage en poids :
2,5 à 4,5 % de carbone ;
0,3 à 3 % de silicium ;
jusqu'à 1 % de manganèse ;
jusqu'à 1 % de chrome ;
jusqu'à 1,5 % de sulfure ;
jusqu'à 0,5 % de phosphore ;
jusqu'à 0,5 % de nickel ;
jusqu'à 1 % de molybdène ;
jusqu'à 0,03 % de cuivre ;
le reste étant du fer ;
plus des impuretés incidentes.

8. Procédé selon l'une quelconque des revendications précédentes, **caractérisé en ce que** la poudre résiduelle métallique présente une taille de particules maximale de 50 µm.

9. Procédé selon l'une quelconque des revendications précédentes, **caractérisé en ce que** la taille des particules moyenne est de 20 µm ou moins.

10. Procédé selon la revendication 9, **caractérisé en ce que** la taille moyenne des particules est de 10 µm ou moins.

11. Procédé selon l'une quelconque des revendications précédentes, **caractérisé en ce que** le mélange de poudre ferreux comporte au moins une poudre supplémentaire sélectionnée parmi le groupe comprenant: graphite; des constituants d'alliage métallique; d'éléments d'aide au frittage ; d'éléments d'aide à l'usinage ; de lubrifiants solides ; et de lubrifiants pour coquille.

12. Procédé selon l'une quelconque des revendications précédentes, **caractérisé en ce que** le mélange comprend au moins un matériau sélectionné parmi le groupe comprenant : les carbures, les oxydes, les borures, les nitrures et autres céramiques et carbonitrures.
